# EUROPEAN PATENT APPLICATION

(11) **EP 1 693 341 A1**
(43) Date of publication of application: **23.08.2006**
(21) Application number: 04820244.4
(22) Date of filing: 08.12.2004
(51) Int. Cl.: C01B 13/02

(54) **HEATER-INTEGRATED NEGATIVELY CHARGED OXYGEN ATOM GENERATOR**

(30) Priority: 11.12.2003 JP 2003412661
(71) Applicant: Oxy Japan Company Limited, Tokyo 102-0083 (JP); DENKI KAGAKU KOGYO KABUSHIKI KAISHA, Chiyoda-ku, Tokyo 100-8455 (JP)
(72) Inventor: TORIMOTO, Yoshifumi, c/o Oxy Japan Company Limited, Tokyo 102-0083 (JP)
(74) Representative: Vossius & Partner
(86) International application number: PCT/JP2004/018319
(87) International publication number: WO 2005/056470

(57) **Abstract**

The invention provides a negatively charged oxygen atom production system adapted to heat a member comprising a calcium aluminate composite material for extraction of negatively charged oxygen atoms. The calcium aluminate composite oxide in a thin-film form is formed on a substrate comprising a zirconia plate or yttria-stabilized zirconia, and a heater for heating the member is formed near the thin film comprising said calcium aluminate composite oxide, or it is integrally formed within the substrate or near its surface. Alternatively, the calcium aluminate composite oxide in a thin-film form is formed on a steatite ceramic heater. The calcium aluminate composite oxide has calcium oxide and aluminum oxide at a molar rate of 12:7.

## Description

### ART FIELD

The present invention relates to a negatively charged oxygen atom production process and a production system used with said production process. Negatively charged oxygen atoms, represented by O⁻, are very useful in various applications such as oxidization reactions in gases, fabrication of silicon oxide films in semiconductor production processes, mold prevention of fruits such as strawberry, maintenance of freshness of see food such as tuna.

### BACKGROUND ART

Among negatively charged oxygen atom production processes known so far in the art, there is a process of producing negatively charged oxygen atoms as by deposition of low energy electrons to oxygen atoms generated by discharge or the like. An energy problem with such a process is, however, that high vacuum is needed for effecting discharge.

There is also a process known in the art (JP62-237733A), wherein ozone is generated by discharge in an oxygen gas, and the ensuing ozone is irradiated with ultraviolet radiation to generate negatively charged oxygen atoms with low energy electrons deposited to oxygen. A problem with such a process is, however, that much discharge energy is necessary for ozone generation.

The inventor has already come up with a negatively charged oxygen atom production process and system which uses a solid electrolyte of oxygen ion conductivity to efficiently produce negatively charged oxygen atoms with no need of high vacuum, and discharge energy, either (Patent Publication 1). The inventor has also proposed another production process and system wherein a calcium aluminate (or aluminic acid calcium salt) composite oxide is used as the above solid electrolyte (Patent Publication 2).

Patent Publication 2 shows a negatively charged oxygen atom production process and system wherein a cathode is located on one side of a member comprising a calcium aluminate composite oxide while an anode is positioned on the opposite surface of that member facing away from the cathode, and oxygen is supplied to the cathode side with a voltage applied between the cathode and the anode thereby extracting negatively charged oxygen atoms from the side with the anode located on it.

The above prior arts are now outlined.

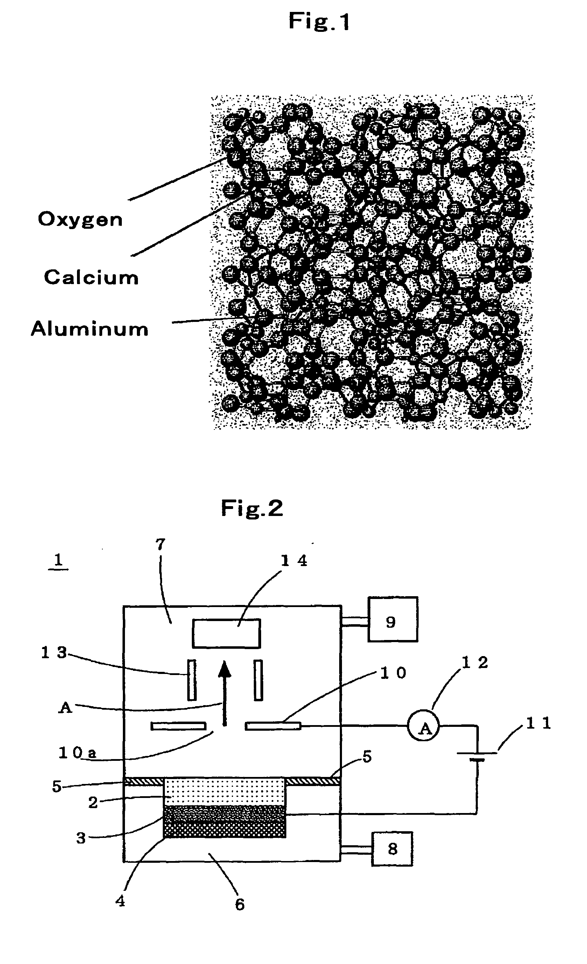

Fig. 1 is illustrative of a crystal structure of 12CaO · 7Al₂O₃ (hereinafter called the C₁₂A₇ for short) that is a typical structure for the calcium aluminate (aluminic acid calcium salt) composite oxide.

In the C₁₂A₇ crystal structure, there is an atmospheric oxygen seized, which have reacted with free oxygen present inside for conversion into a pair of O₂⁻ ion and O⁻ ion. When voltage is applied to the C₁₂A₇, the O⁻ ion, because of being capable of passing through crystal lattice, is released off as such, whereas the O₂⁻ ion larger in diameter than that would not be released off.

When it comes to the use of calcium carbonate and aluminum oxide, the mixing ratio of both is preferably regulated to 12/7 in terms of molar ratio. The mixture of calcium carbonate and aluminum oxide is preferably fired in an atmosphere with regulated partial pressures of oxygen and steam. Firing is preferably carried out at a partial pressure of oxygen of 10.1 kPa or higher, and the atmosphere here may contain argon or other inert gas together with oxygen.

The firing temperature for calcium carbonate and aluminum oxide is preferably 1,200°C or higher, and more preferably 1,300 to 1,450°C, and the firing time is preferably 4 to 8 hours, and more preferably 5 to 7 hours.

The calcium aluminate composite oxide according to the invention may be formed into the desired shape to form a self-supporting member or, alternatively, it may be formed as a layer on a porous, heat-resistant substrate.

A member comprising the calcium aluminate composite oxide or a calcium aluminate composite oxide layer may be formed on the supporting substrate by a powder formation technique, a coating layer-firing technique, or plasma spraying, sputtering or other film-formation technique that does not cause any modification of the composition of the starting material oxide.

The above negatively charged oxygen atom production system is now explained with reference to Fig. 2.
This negatively charged oxygen atom production system indicated generally at 1 has a fired member 2 comprising the calcium aluminate composite oxide. On the surface of the fired member 2, a cathode 3 is located together with heating means 4 for heating the fired member, for instance, an electric heater. A partition 5 is used to separate that system into an oxygen feed chamber 6 and a negatively charged oxygen atom generator chamber 7.

The oxygen feed chamber 4 is connected with an oxygen supply source 8, and the negatively charged oxygen atom generator chamber 7 is connected with a depressurizing device 9. The negatively charged oxygen atom generator chamber 7 is provided with an anode 10 spaced away from the fired member 2, and with a power source 11 for applying voltage between the cathode 3 and the anode 10, while an ammeter 12 for measuring currents between both electrodes is coupled in place. Further, the negatively charged oxygen atom generator chamber 7 is provided with a negatively charge oxygen atom control quadruple electrode 13 and a target 14.

Main components are now explained.
The cathode 3 located on the surface of the fired member 2 may be formed of various materials provided that they can conduct currents through the fired member. Note, however, that because the cathode 3 is located in the oxygen feed chamber 6, it should preferably be formed of an electrically conductive material that does not oxidize, corrode or degrade when heated in an oxygen atmosphere, for instance, metals and electrically conductive metal oxides. Particular preference is given to noble metals such as gold or platinum and materials such as nickel and stainless steel, and more particular preference is given to gold, and platinum.

For instance, the cathode 3 may be formed on the fired member 2 by a technique of coating an electrically conductive composition containing an electrode metal or electrically conductive material on the fired member, a technique of forming an electrode metal by vacuum film formation processes such as sputtering, and chemical vapor deposition (CVD), or a technique of bonding a network metal to the fired member. Among others, the technique of coating the electrically conductive composition on the fired member has the advantage of allowing the electrodes to be formed at any desired position.

Oxygen would have been adsorbed onto the metal electrode on the surface of the fired member to generate oxygen ions to be introduced into the fired member. Thus, the electrode to be located on the surface of the fired member should preferably be formed of platinum or other noble metal that works favorably for the adsorption and ionization of oxygen.

Cathode thickness is 0.1 to 1,000 µm, preferably about 10 to 500 µm in consideration of strength and ease of handling.
The heating means 4 for the fired member 2 may be a heater or other device located in contact with the fired member, as depicted in Fig. 2. However, it is acceptable that an infrared lamp, a high-frequency heater or other like heating means is spaced away from the fired member.

The anode 10 may be formed of materials stable to oxygen, for instance, an alloy such as stainless steel, a noble metal such as gold or platinum, or a metal such as nickel, among which stainless steel (e.g., SUS304, SUS430) is preferred for the reasons of ease of handling and enhanced robustness. This anode may be configured into a rod, line, network or flat plate shape or, alternatively, it may be configured into a flat plate shape having an opening 10a in its center, as depicted in Fig. 1.

Alternatively, the anode 10 may be obtained by forming a film form of each metal on a non-electrically conductive member as by sputtering or chemical vapor deposition.
The distance between the fired member 2 and the anode 10 is in the range of 5 to 100 mm, preferably 10 to 50 mm, and more preferably 10 to 30 mm for the purpose of making effective use of the generated negatively charged oxygen atoms and generating negatively charged oxygen atoms at low voltage.

The production of negatively charged oxygen atoms is carried out after the pressure within the negatively charged oxygen atom generator chamber 7 is reduced by the depressurizing device 9 connected to it to prevent the ensuing negatively charged oxygen atoms from vanishing by collision with moisture or the like in the air.

With oxygen supplied to the oxygen feed chamber 6, the fired member is heated by the heating means 4 and currents are conducted from the power source 11 to the cathode 3 and the anode 10, so that negatively charged oxygen atoms A occur continuously, arriving at the target 14 placed in the negatively charged oxygen atom generator chamber.

When the negatively charged oxygen generator chamber is filled therein with a rare gas such as helium or argon, it is possible to prevent the ensuing negatively charged oxygen atoms from vanishing by reactions, and in that case, depressurization is dispensed with.

Where to locate the target 14 may be a position at which negatively charged oxygen atoms arrive well; that is, the target 14 may be positioned 1 to 100 mm, preferably 5 to 50 mm away from the fired member.
The potential difference between the cathode and the anode is between 1 and 2,000 V/cm, preferably between 10 and 1,000 V/cm, and more preferably between 50 and 500 V/cm. When that potential difference is below 1 V/cm, generation efficiency become low, and at greater than 2,000 V/cm, there may often be damages to the fired member or the electrode.

The fired member is heated to preferably 200 to 1,000°C, and more preferably 500 to 800°C. At lower than 200°C, there is insufficient generation efficiency, and at higher than 1,000°C, there is the need of using a special heat-resistant material, which is not preferred.

While voltage is applied between both electrodes, oxygen that is the starting material for generating negatively charged oxygen atoms is fed from the oxygen feed means including air, and so negatively charged oxygen atoms occur continuously.

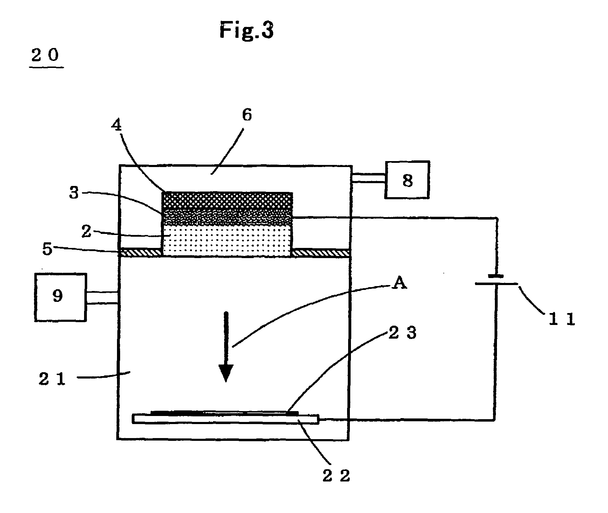

Fig. 3 is illustrative of one example of a semiconductor device processing system with the above negatively charged oxygen atom production system built in it.
The semiconductor device processing system, indicated generally by 20, includes a negatively charged oxygen atom production system on top of a processing tank 21. On the surface of a fired member 2 comprising the calcium aluminate composite oxide, a cathode 3 is located together with a heating means 4 for heating the fired member, for instance, an electric heater. A partition 5 is used to separate an oxygen feed chamber 6 from the processing tank 21. The oxygen feed chamber 6 is connected with an oxygen supply source 8, and the processing tank 21 is connected with a depressurizing device 9. Within the processing tank 21, there is a substrate table 22 of electrical conductivity placed, and on the substrate table, there is a semiconductor substrate 23 placed. That substrate table is coupled to the positive pole side of a power source to apply voltage on it.

After the processing tank 21 reaches a given degree of depressurization by the depressurizing device 9, the fired member 2 is heated with oxygen fed to the oxygen feed chamber 5. In this state, as voltage is applied to the substrate table behaving as a cathode plus anode, it causes negatively charged oxygen atoms A to occur continuously, arriving at the semiconductor substrate 23, so that it is processed in various ways.

For instance, silicon or the like is oxidized by reactions with the negatively charged oxygen atoms A. Further, the negatively charged oxygen atoms according to the invention, because of having strong oxidizing power, are also usable at an ashing step of decomposing off resists formed on the semiconductor substrate.

The above prior negatively charged oxygen atom generator system has a structure where there is the electrode 3 placed on the surface of the fired member 2, with the heater 4 positioned on the electrode 3. However, the fired member 2 (C₁₂A₇) must have a certain thickness so as to maintain strength, because it is relatively brittle and crumples as soon as it receives impacts or the like. That thickness must be at least 1 to 2 mm or more in consideration of mechanical strength.

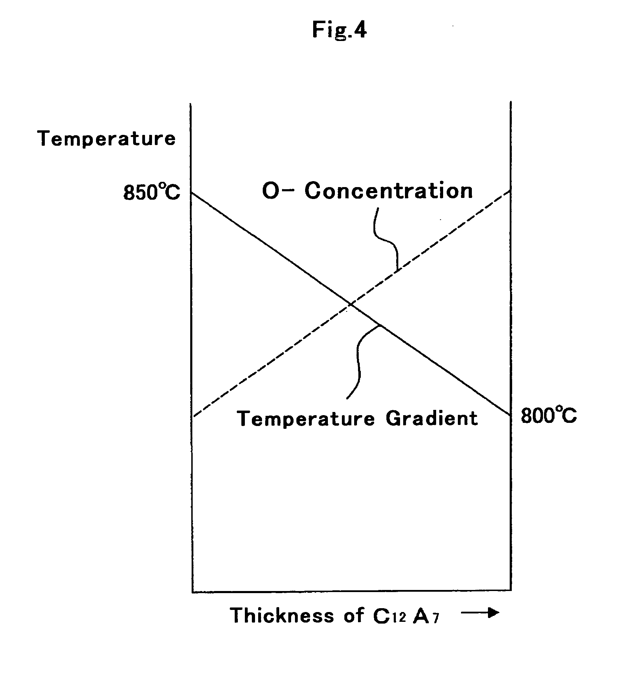

As the thickness of the C₁₂A₇ reaches 1 to 2 mm, however, it causes a temperature difference, if not large, to occur on both surfaces of the C₁₂A₇. As shown typically in a schematic representation of Fig. 4, it has been observed that when the back surface (on the heater side) of the C₁₂A₇ in its thickness direction is at 850°C, the temperature of the front surface (the right side of Fig. 4) becomes 800°C. As well known in the art, and as can be seen from Fig. 4, the concentration of O⁻ is inversely proportional to temperature, and in this case, the concentration of O⁻ on the surface side of the C₁₂A₇ becomes higher than that on the back surface side. As there is such an O⁻ concentration gradient in the C₁₂A₇, it causes the behavior (diffusion) of O⁻ from left to right in Fig. 4 to become worse, because the diffusion of a substance generally makes its way from a higher to lower concentration. In other words, to release O⁻ out of the surface with efficiency, it is preferable that the concentration of O⁻ on the back surface side is larger than that on the front surface side; however, the concentration gradient plotted in Fig. 4 would go against this.

In Fig. 2 or Fig. 3, there is the above phenomenon in which, because the C₁₂A₇ is heated from the back surface side, the release (upward in Fig. 2) of O⁻ from the surface of the C₁₂A₇ is found to be not always sufficient. This is also affected by another phenomenon in which, because O⁻ is released by heat at a temperature of 800°C, the absorption of oxygen decreases with this, and so the absorption of oxygen on the back side surface becomes insufficient.

Thus, when the semiconductor substrate is used as the target as depicted in Fig. 3, the oxidizing treatment for its surface must be carried out by heating the surface of the C₁₂A₇ with a heat radiation lamp or other heater placed on the target (surface) side of the C₁₂A₇ in a depressurizing vessel, as already taught in the specification of another application by the same applicant. This will push for the release of O⁻, because the temperature on the front surface side of the C₁₂A₇ grows higher than that on the back surface side, so that the concentration of O⁻ on the front surface side becomes lower than that on the back surface side. However, there is then additional equipment, say, the above heat radiation lamp, which renders the system bulkier and power consumption heavier. Further, an increase in the amount of generated heat often causes damages such as cracks to the C₁₂A₇ due to thermal stresses.

The above prior arts are now explained.

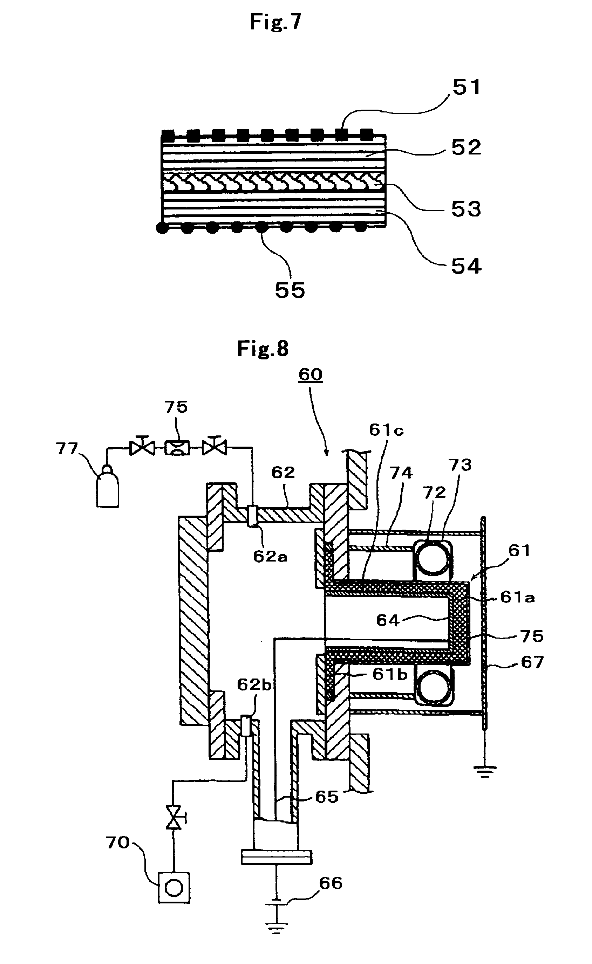

Fig. 8 is illustrative in schematic section of the "oxygen minus ion generator" proposed so far in the art.
The above oxygen minus ion generator indicated generally by 60 includes a cylindrical oxygen minus ion generator member 61, and a ring-form halogen lamp (hereinafter called the circle lamp) 72 that is placed a few mm away from the outer periphery of an end portion of that member 61, at which an oxygen minus ion releaser 61a is positioned. There is a reflector 73 located around the side and back surfaces of the circle lamp 72. The circle lamp 72 and the reflector 73 are supported by a support member 74 on an ion generator vessel 62. In the oxygen minus ion generator 60, a substrate 61c that forms the cylindrical oxygen minus ion generator member 61 is made of a solid electrolyte that is zirconia (ZrO₂) having strength, and the substrate 61c is coated with a thin layer 75 all over the surface (except a collar 61b on the circle lamp 72 side), wherein the thin layer 75 is made of another solid electrolyte that is calcium · aluminate (C₁₂A₇) that generates oxygen minus ions. The thin layer 75 made of calcium · aluminate (C₁₂A₇) may be coated by known plasma spraying as an example. The oxygen minus ion releaser 61a of the oxygen minus ion generator member 61 has a thickness of 3 mm, with the rest of 2 mm in thickness, and the thin layer 75 has a thickness of about 100 µm.

Further, a film-form electrode 64 made of an electrically conductive metal is formed all over the internal surface of the substrate 61c (the back surface facing away from the surface on a leading electrode 67 side) by means of coating and firing or deposition in vacuum of a liquid paste. Specifically, the electrode 64 is formed of an electrically conductive material of 0.5 µm to 1 µm in thickness such as platinum, and gold-lanthanum-manganate, and includes numerous micropores in it. The electrode 64 is connected with a dc power source 66 by way of a conductor 65, so that a dc voltage of negative (minus) polarity is applied to it from the dc power source 66.

Referring more specifically to the oxygen minus ion generator 60 of such construction as described above, the full length of the oxygen minus ion generator member 61 (the length between the oxygen minus ion releaser 61a and the collar 61b on the base end side) is set at 100 mm; the thickness of the oxygen minus ion releaser 61a is set at 3 mm; the diameter of the oxygen minus ion releaser 61a is set at 23 mm; the diameter of the circle lamp 72 is set at 10 mm; the output of the circle lamp 72 is set at 160 W to 300 W; the gap between the inner periphery of the circle lamp 72 and the surface of the oxygen minus ion generator member 61 is set at 3 mm; and the voltage applied to the electrode 64 is set at -100 V.

When the oxygen minus ion generator 60 is operated to generate oxygen minus ions, the circle lamp 72 generates heat by conduction of currents from the heater power source. Infrared light radiated from the circle lamp 72 by the generation of heat from it is reflected at the reflector 73 to heat the vicinity of the end portion of the oxygen minus ion generator member 61, at which the oxygen minus ion releaser 61a is mounted. By the heat generated out of the circle lamp 72 positioned on the outside of the oxygen minus ion generator member 61, the whole surface on the front surface side of the oxygen minus ion releaser 61a is effectively and uniformly heated. By the heat generated out of the outside circle lamp 72, the front surface side of the oxygen minus ion releaser 61 is heated to about 800°C at which oxygen minus ions occur.

In this state, while an evacuation pump 70 is driven to evacuate the interior of the ion generator vessel 62 to a vacuum of about 1.3×10⁻³ Pa, an oxygen gas is admitted from an oxygen tank 77 through an oxygen gas inlet 62a into the ion generator vessel 62 at a flow rate that is controlled to about 100 to 1,000 sccm by a gas flow controller 75, thereby setting the interior of the ion generator vessel 62 at about 1.3×10⁻³ Pa.

In this state, a dc voltage (-100 V) of negative (minus) polarity is applied from the dc power source 66 to the electrode 64 by way of the conductor 62 to create an electric field in the oxygen minus ion releaser 61a, so that oxygen minus ions (O⁻) migrate from the back surface side to the front surface (on the leading electrode 67 side) by way of ion conduction.

Here, since the film-form electrode 64 made of an electrically conductive metal is formed all over the internal surface of the substrate 61c that forms the oxygen minus ion generator member 61 (the back surface facing away from the surface on the leading electrode 67 side), there is the temperature gradient from the oxygen minus ion releaser 61a down to the collar 61b, which gets hold of a temperature area (about 500°C to about 600°C) that is optimum for seizing oxygen on the minus ion releaser 61a side, ensuring that oxygen can be efficiently seized in the oxygen minus ion generator member 61.

And then, oxygen minus ions (O⁻) migrating to the surface of the oxygen minus ion releaser 61a are released forwardly in the vacuum (toward the leading electrode 67 side), and then discharged into the vacuum chamber via the numerous micropores provided through the leading electrode 67.

In one possible modification, the thin film-form C₁₂A₇ may be formed on a robust solid electrolyte substrate such as zirconia or yttria-stabilized zirconia and a heater is attached on the back surface side of that substrate. Alternately, the C₁₂A₇ in that modification may be heated from outside, using a circle lamp. However, a problem with the arrangement having the heater mounted on the back surface side of the substrate is that the above solid electrolyte is poor in thermal conductivity. Thus, the heater must be brought to a higher temperature so as to heat the C₁₂A₇ to 800°C or higher, causing a thermal crack problem or increased power consumption as is the case with the above arrangement. Again, a problem with the outside heater is that the system grows bulky with increased power consumption.
Patent Publication 1: International Application No. 96/17803 pamphlet
Patent Publication 2: Internal Application No. 03/050037 pamphlet

### DISCLOSURE OF THE INVENTION

### PROBLEM TO BE SOLVED BY THE INVENTION

An object of the invention is to provide an O⁻ generator that is substantially free from the defects of the prior art, i.e., that can efficiently heat the C₁₂A₇ with reduced power yet make a release of O₋ from the surface of the C₁₂A₇ sufficient, ensuring that the whole generator system can be slimmed down and thermal stresses to the C₁₂A₇ are so reduced that breakdowns such as cracks can be held back.

### MEANS FOR SOLVING THE PROBLEM

To accomplish the above object, the invention provides a negatively charged oxygen atom production system adapted to heat a member comprising a calcium aluminate composite material for extraction of negatively charged oxygen atoms, characterized in that:
said calcium aluminate composite oxide in a thin-film form is formed on a substrate comprising a zirconia plate or yttria-stabilized zirconia, and a heater for heating said member is formed within said substrate and near the thin film comprising said calcium aluminate composite oxide.

The above production system is further characterized in that said heater for heating is sandwiched between upper and lower substrates, each comprising said zirconia plate or yttria-stabilized zirconia.

Alternately, the invention provides a negatively charged oxygen atom production system adapted to heat a member comprising a calcium aluminate composite oxide for extraction of negatively charged oxygen atoms,
characterized in that:
said calcium aluminate composite oxide in a thin-film form is formed on a substrate comprising a zirconia plate or yttria-stabilized zirconia, and a heater for heating said member is formed contiguous to, and integrally with, the thin film comprising said calcium aluminate composite oxide.

[0045] The above production system is further characterized in that said heater for heating is formed on the substrate comprising a zirconia plate or yttria-stabilized zirconia and said calcium aluminate composite oxide is formed in a thin-film form from above or, alternatively, said heater for heating is formed on a thin film of calcium aluminate composite oxide formed on said substrate comprising a zirconia plate or yttria-stabilized zirconia.

Yet alternately, the invention provided a negatively charged oxygen atom production system adapted to heat a member comprising a calcium aluminate composite oxide for extraction of negatively charged oxygen atoms,
characterized in that:
said calcium aluminate composite oxide in a thin-film form is formed on a steatite ceramic heater substrate.

Each of the above production systems is further characterized in that a cathode is located on the back surface side of the substrate with said calcium aluminate composite oxide in a thin-film form formed thereon, and an anode is located on the side of the substrate facing away from the cathode, wherein oxygen is fed to the cathode side and a voltage is applied between the cathode and the anode for extraction of negatively charged oxygen atoms from the side with the anode located thereof.

Each production system is further characterized in that said anode is located with a space from the member formed of the calcium aluminate composite oxide.
Each production system is further characterized in that said calcium aluminate composite oxide comprises calcium oxide and aluminum oxide in a molar ratio of 12:7, said calcium aluminate composite oxide has been obtained by firing calcium carbonate and aluminum oxide at a firing temperature of 1,300°C to 1,450°C, and said heating temperature is 200°C to 1,000°C.

### ADVANTAGES OF THE INVENTIONO

Thus, the invention can provide an O⁻ generator that can efficiently heat the C₁₂A₇ with reduced power yet make a release of O⁻ from the surface of the C₁₂A₇ sufficient, ensuring that the whole generator system can be slimmed down and thermal stresses to the C₁₂A₇ are so reduced that breakdowns such as cracks can be held back.

### BEST MODE FOR CARRYIING OUT THE INVENTION

The invention is now explained more specifically with reference to the accompanying drawings and its examples.

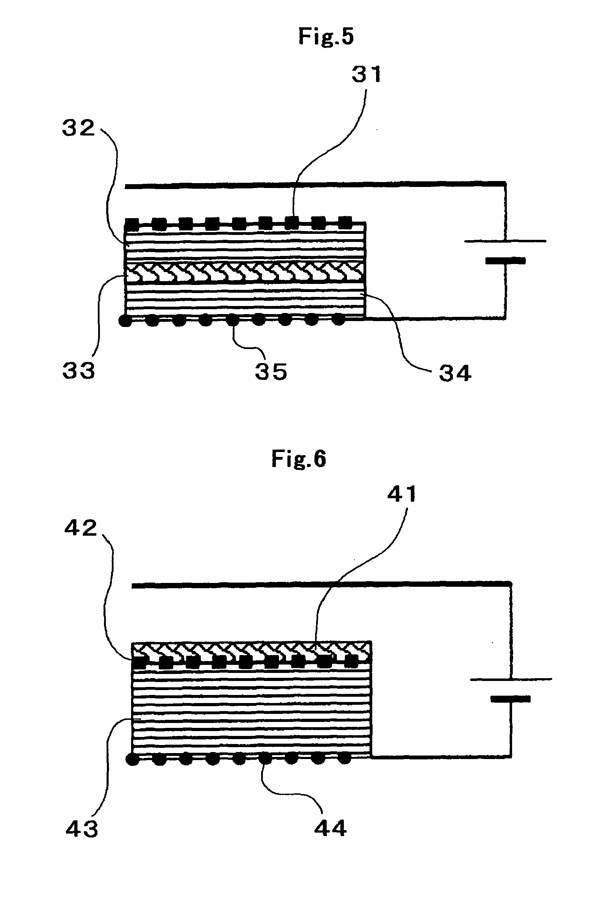

Fig. 5 is illustrative of one basic structure of the combination heater/negatively charged oxygen generator.
Referring to Fig. 5, reference numeral 32, 34 stands for a robust solid electrolyte substrate such as a zirconia or yttria-stabilized zirconia (hereinafter called YSZ for short) substrate, and 31 represents a thin film C₁₂A₇ formed on the substrate. Reference numeral 35 is indicative of a porous electrode corresponding to the cathode 3 in Fig. 2, and 33 is indicative of a heater.

As depicted in Fig. 5, the C₁₂A₇ is in a thin-film form having a thickness of 5 to 1,000 µm, with no substantial temperature difference between its back surface and its front surface. In the C₁₂A₇, therefore, there is no such a temperature gradient as depicted in Fig. 4, and so even heating the C₁₂A₇ from its back surface causes nothing wrong to the release efficiency of O⁻ from its front surface.

The generator of the invention, because the heater 33 is built in the YSZ 32, 34, has the advantages of having higher efficiency of heating the C₁₂A₇ and more reduced power consumption over the prior art structure with heat applied to the back surface side of the substrate. Moreover, it is possible to dispense with any external heater, so that the generator can be slimmed down.

Because there are YSZ's (34, 43, 54) between the back surface side (35 side) and the heater, the surface temperature of the back surface side becomes low, and so much more oxygen is sucked on the back surface side than can be possible with the prior art structure with the heater located on the back surface side.

Fig. 6 is illustrative of another fundamental structure of the combination heater/negatively charged oxygen generator according to the invention. A difference between Fig. 6 and Fig. 5 lies in a heater 41 located on the outside of a C₁₂A₇ 42 provided in a thin-film form. Note here that the heater 41 is of such a network structure as not to provide any obstacle to the release of negatively charged oxygen. In Fig. 6, reference numeral 42 is indicative of a thin-film form of C₁₂A₇ formed on the substrate, 43 an YSZ substrate, and 44 a porous electrode.

Fig. 7 is illustrative of yet another fundamental structure of the combination heater/negatively charged oxygen generator according to the invention. This fundamental structure, much the same as in Fig. 5, is used in the absence of the external electric field of Figs. 5 and 6.
A difference between Fig. 5 and Fig. 7 is that O⁻ is forcedly extracted by an electric field in the case of Fig. 5, whereas O⁻ is formed by thermal desorption from the surface of the C₁₂A₇ in the case of Fig. 7. The former is usable with semiconductor fabrication systems or the like, whereas the latter is applicable to fields of sterilization, deodorization, etc., for instance, tiles in toilets or kitchens, and air conditioners. The generator, when used in semiconductor fabrication systems, has the same peripheral structure as in the embodiment of Fig. 8, except the O⁻ generator portion.

From the results of experimentation, it has been confirmed that O⁻ occurs at 400°C, and if the generator is used with some protector adapted to cover its upper portion, it can then be used in toilets or air conditioners without concern over burns. The embodiment of Fig. 7 is supposed to harness O⁻ on the surface of the C₁₂A₇. For sterilization purposes, the arrangement of Fig. 5 may be used at sites to which electric fields may be applied, and for deodorization purposes, the arrangement of Fig. 5 or Fig. 7 is preferably used in a honeycomb configuration.

The generator of the invention could also be used in the air. O⁻ that is present near a space away from the C₁₂A₇ diffuses into the air and reacts with water into a negative ion cluster, and so oxidization reactions are going to proceed well. For deodorization and sterilization in the air, air circulation techniques (for instance, air conditioners) may be used in addition to the above discharging techniques in the air. Especially for sterilization using a specific vessel (PET bottles, surgical tools, etc.), it is preferable to locate that specific vessel between the opposite electrodes of the C₁₂A₇.

Some examples of the negatively charged oxygen generator of the self-heating type multilayer structure are now given.

### (Example 1)

A platinum heat-generation element equivalent to 150 W is coated on an 8-mol% yttria-stabilized zirconia (YSZ) plate (30×30×1 (thickness) mm) (made by Nikkatoh), and lanthanum strontium manganate (hereinafter LSM for short) is coated on one side of the YSZ plate for a 2-hour firing at 1,200°C. The C₁₂A₇ is then plasma sprayed on the ensuing platinum heat-generation element on the YSZ plate. To generate O⁻ from the resulting multilayer structure YSZ, a power of 50 V and 30 A is charged to the platinum heat-generation element. That the YSZ plate is heated to 800°C is checked on a thermometer mounted on the surface of the plate. After heating, as a voltage of 100 V was applied across the LSM in such a way that the opposite electrodes spaced away from the C₁₂A₇ took on a positive potential, it was ascertained that there was a current of 2 µA flowing between both electrodes.

### (Example 2)

3 mol% yttria-stabilized zirconia (YSZ) powders are compression molded into a disk form of 30φ×1 mm (thickness). The ensuring disk is fired at 1,400°C for 2 hours. Further, LSM is coated on the disk surface for a 2-hour firing at 1,200°C. C₁₂A₇ is plasma sprayed on the platinum heat-generation element on the YSZ plate. On that C₁₂A₇, a platinum heat-generation element designed in such a way as to be pre-printed is applied onto the disk. To generate O⁻ from the thus obtained multilayer structure YSZ as in Example 1, a power is charged to the platinum heat-generation element. That the YSZ plate is heated to 800°C is checked on a thermometer mounted on the surface of the plate. After heating, as a voltage was applied across the LSM in such a way that the opposite electrodes spaced away from the C₁₂A₇ took on a positive potential, it was ascertained that there was a current flowing between both electrodes.

### (Results 1 of Experimentation)

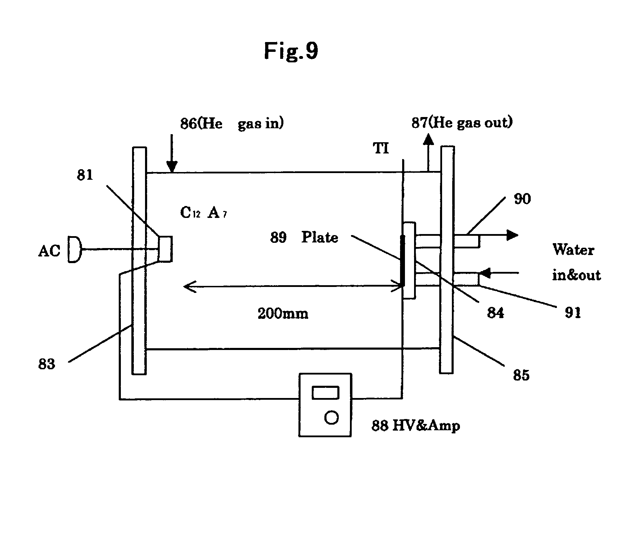

An experimentation system is depicted in Fig. 9, wherein reference numeral 81 is the self-heating type negatively charged oxygen generator of the invention with C₁₂A₇ on its surface; 83, 85 are each a flange; and 84 is a stainless table. A target (freeze dried Bacillus white powders) is positioned on the stainless table 84 through mica (insulating material). He gas flows in from above 86, and flows out via 87. Reference numeral 88 is indicative of a high-voltage power source (HV) and an ammeter. The stainless table is so hollowed that water coolant flows in from 91 and flows out through 90. Thus, the stainless table 84 is maintained at normal temperature of about 20°C. The C₁₂A₇ formed on the surface of the self-heating type negatively charged oxygen generator 81 releases O-, which is then guided by the He gas or an electric field to hit on the target 89 on the stainless table at a distance of 200 mm.

Bacillus coaglans spores were intermingled with refined water to prepare a 10% aqueous solution, which was then freeze dried on a sample plate (alumina cup). The regulated sample was kept stationary on a sample reaction cooler placed in an O⁻ irradiator for sterilization experiments under various conditions.

The results of experimentation are set out in Table 1.

**Table 1**

| | |
|---|---|
| Initial Bacterial Concentration | 1.2×10⁹ |

| | |
|---|---|
| 100V, 10 min. | 1.1×10⁸ |
| Quartz Tube Blank | 1.2×10⁹ |

As shown in Table 1, upon irradiation with O⁻ at 100 V for 10 minutes, the initial bacterial concentration of 1.1×10⁹ plunged down to 1.1×10⁸ or 1/10. In the quartz tube blank, on the other hand, there were no bacterial reductions. Note here that the quartz tube blank was a comparative experimentation wherein similar experiments were preformed only with a quartz tube having no C₁₂A₇.

As described above, the condition under which a current of about 2 µA was gained by applying a potential of 100 V to the freeze dried Bacillus spore target used as the sample could be set up, and by a 10-minute irradiation with O⁻ under the same condition using He, 90% of the bacteria were found to die in comparison with the blank. It is here noted that when experimentation was performed under the same condition yet with only He carrier in no applied electric field, barely about 30% of the bacteria died.

From the results here, it has been ascertained that 120°C thermoresistant bacilli can be killed by irradiation with at least O⁻. Note here that bacilli can spore upon heating, and are the strongest ever of all bacteria. In other words, if 120°C thermoresistant bacilli can be killed, it means that all other bacteria die out certainly.

### (Example 3)

In another recommendable example of the invention, the C₁₂A₇ is sprayed onto a general-purpose ceramic heater.
The basic structure is the same as that depicted in Fig. 6, except that instead of the YSZ in Fig. 5, the ceramic heater is used for the substrate 43 in Fig. 6.

The example using the above ceramic heater is now explained. Note here that steatite ceramics do not transmit O⁻ unlike the YSZ or the like. Therefore, once all O⁻ contained in the C₁₂A₇ is released, there is no O⁻ available at all; the ceramic heater type negatively charged oxygen atom generator must be of a cartridge type.

However, O⁻ accounts for about 3 wt% of the C₁₂A₇, and experimentation teaches that a 100-µm thick C₁₂A₇ would have a service life of about 100 hours enough long for use in commercial applications such as sterilization or the like. In this case, the use of dry air as a carrier in no applied electric field is recommendable because the system involved is simpler, safer, and more inexpensive.

It is also noted that in the absence of electric filed suction, irradiation with O⁻ takes place by way of natural diffusion, and the diffusion rate of O⁻ is about 20 cm/s when the carrier is He. When there is no electric field with all other conditions being equal, it has been observed that the amount of O⁻ plunges down to about 1/3 when He is used as the carrier, and to about 1/10 to about 1/20 when dry air rather than He is used as the carrier. Because He is costly, it is recommendable to make use of such dry air for the purpose of sterilizing a great deal of PET bottles, medical equipments or the like.

### (Results 2 of Experimentation)

An assembly is prepared by plasma spraying of the C12A7 onto QFE made by Ceramix Co., Ltd. (6*6 cm ceramic heating element) at a thickness of 500 µm. Voltage control is done in such a way as to bring the surface temperature of that assembly to 600°C. It is observed that by application of 100 V to a spatial electrode facing the C₁₂A₇ surface facing the C₁₂A₇ surface with respect to a ground potential, there is a spatial current of 1 µA, indicating that O⁻ occurs. The ensuing O- is carried to near reaction product graphite using dry air, He or other gas as a carrier gas. The reaction product is delivered to an analyzer, using He gas, so that it can be observed. Products occurring in the system upon stopping the operation of application of voltage were also observed. The experimental system used, too, was the same as in Fig. 9.
Results of Observation of Products
Applied Voltage 100 V: CO 10 ppm
No Applied Voltage: CO 0 ppm

### (Results 3 of Experimentation)

An assembly is prepared by plasma spraying of the C₁₂A₇ onto QFE made by Ceramix Co., Ltd. (6*6 cm ceramic heating element) at a thickness of 500 µm. Voltage control is done in such a way as to bring the surface temperature of that assembly to 800°C. It is observed that by application of 100 V to a spatial electrode facing the C₁₂A₇ surface with respect to a ground potential, there is a spatial current of 10 µA, indicating that O⁻ occurs. The ensuing O- is carried to near reaction product graphite using dry air, He or other gas as a carrier gas. The reaction product is delivered to an analyzer, using He gas, so that it can be observed. Products occurring in the system upon stopping the operation of application of voltage were also observed.
Results of Observation of Products
Applied Voltage 100 V: CO 100 ppm
No Applied Voltage: CO 0 ppm

### (Results 4 of Experimentation)

An assembly is prepared by plasma spraying of the C₁₂A₇ onto QFE made by Ceramix Co., Ltd. (6*6 cm ceramic heating element) at a thickness of 500 µm. Voltage control is done in such a way as to bring the surface temperature of that assembly to 800°C. O⁻ thermally desorbed by the surface temperature is delivered to the sample to be sterilized, using a carrier gas (dry air, He). The O⁻ is brought into contact with the pre-prepared bacterial mass (bacillus spores) for 5 minutes, stopping the delivery of the gas. The sample was removed to observe to what degree the bacteria were killed. In another test run, a newly prepared bacterial sample is placed stationary in the system for 5 minutes with no irradiation with O⁻ and no application of heat, either. Thereafter, the sample was removed to observe the state of the bacteria.

| Results of Observation | Number of Bacteria | Killing Rate |
|---|---|---|
| Irradiation with O⁻ | 5×10⁸ | 50% |
| No Irradiation with O⁻ | | |
| (No Application of Heat) | 1×10⁹ | 0% |

It has been found that the 120°C thermoresistant bacilli can be killed by irradiation with O⁻ in the absence of any electric field, as described above.

### POSSIBLE APPLICATIONS TO THE INDUSTRY

The combination heater/generator for generation of negatively charged oxygen is effectively used for not just the oxidization processing of semiconductors as depicted in Figs. 2 and 3 but also for cleaning off filth on tiles in toilets, kitchens, etc., removal of bad odors, removal of atmospheric bacteria, molds, etc.

### BRIEF EXPLANATION OF THE DRAWINGS

Fig. 1 is illustrative in schematic of the C12A7 used herein.
Fig. 2 is illustrative of a negatively charged oxygen generator proposed in the art.
Fig. 3 is illustrative of a negatively charged oxygen generator for semiconductors proposed in the art.
Fig. 4 is representative of a temperature gradient across the C₁₂A₇.
Fig. 5 is illustrative of the structure of one example of the negatively charge oxygen generator according to the invention.
Fig. 6 is illustrative of the structure of another example of the negatively charge oxygen generator according to the invention.
Fig. 7 is illustrative of the structure of yet another example of the negatively charge oxygen generator according to the invention.
Fig. 8 is illustrative of the structure of another example of the negatively charged oxygen generator proposed in the art.
Fig. 9 is illustrative in conception of the system used for sterilization experimentation according to the invention.

### EXPLANATIONS OF THE REFERENCE NUMERALS

- 2:: C₁₂A₇,
- 3:: cathode,
- 4:: heating means,
- 7:: negatively charged oxygen atom generator chamber,
- 8:: oxygen supply power,
- 9:: depressurizing device,
- 10:: anode,
- 11:: power source,
- 14:: target,
- 31:: C₁₂A₇,
- 32:: YSZ,
- 33:: heater,
- 34:: YSZ,
- 35:: porous electrode,
- 41:: heater,
- 42:: C₁₂A₇,
- 44:: porous electrode,
- 51:: C₁₂A₇,
- 52:: YSZ,
- 53:: heater,
- 54:: YSZ,
- 55:: porous electrode,
- 84:: stainless table.

## Claims

1. A negatively charged oxygen atom production system adapted to heat a member comprising a calcium aluminate composite material for extraction of negatively charged oxygen atoms, **characterized in that**:
said calcium aluminate composite oxide in a thin-film form is formed on a substrate comprising a zirconia plate or yttria-stabilized zirconia, and a heater for heating said member is formed within said substrate and near the thin film comprising said calcium aluminate composite oxide.

2. The negatively charged oxygen atom production system according to claim 1, **characterized in that** said heater for heating is sandwiched between upper and lower substrates, each comprising said zirconia plate or yttria-stabilized zirconia.

3. A negatively charged oxygen atom production system adapted to heat a member comprising a calcium aluminate composite oxide for extraction of negatively charged oxygen atoms, **characterized in that**:
said calcium aluminate composite oxide in a thin-film form is formed on a substrate comprising a zirconia plate or yttria-stabilized zirconia, and a heater for heating said member is formed contiguous to, and integrally with, the thin film comprising said calcium aluminate composite oxide.

4. The negatively charged oxygen atom production system according to claim 3, **characterized in that** said heater for heating is formed on the substrate comprising a zirconia plate or yttria-stabilized zirconia and said calcium aluminate composite oxide is formed in a thin-film form from above.

5. The negatively charged oxygen atom production system according to claim 3, **characterized in that** said heater for heating is formed on a thin film of calcium aluminate composite oxide formed on said substrate comprising a zirconia plate or yttria-stabilized zirconia.

6. A negatively charged oxygen atom production system adapted to heat a member comprising a calcium aluminate composite oxide for extraction of negatively charged oxygen atoms, **characterized in that**:
said calcium aluminate composite oxide in a thin-film form is formed on a steatite ceramic heater substrate.

7. The negatively charged oxygen atom production system according to any one of claims 1 to 7,
**characterized in that** a cathode is located on a back surface side of the substrate with said calcium aluminate composite oxide in a thin-film form formed thereon, and an anode is located on a side of the substrate facing away from the cathode, wherein oxygen is fed to a cathode side and a voltage is applied between the cathode and the anode for extraction of negatively charged oxygen atoms from a side with the anode located thereon.

8. The negatively charged oxygen atom production system according to claim 7, **characterized in that** said anode is located with a space from the member formed of the calcium aluminate composite oxide.

9. The negatively charged oxygen atom production system according to any one of claims 1 to 8,
**characterized in that** said calcium aluminate composite oxide comprises calcium oxide and aluminum oxide in a molar ratio of 12:7.

10. The negatively charged oxygen atom production system according to claim 9, **characterized in that** said calcium aluminate composite oxide has been obtained by firing calcium carbonate and aluminum oxide at a firing temperature of 1,300°C to 1,450°C.

11. The negatively charged oxygen atom production system according to any one of claims 1 to 10,
**characterized in that** said heating temperature is 200°C to 1,000°C.
